(19)

Europäisches
Patentamt
European
Patent Office
Office européen
des brevets

(11) **EP 4 730 420 A1**

(12) **EUROPEAN PATENT APPLICATION**
published in accordance with Art. 153(4) EPC

(43) Date of publication:
**22.04.2026 Bulletin 2026/17**

(21) Application number: **23942083.9**

(22) Date of filing: **19.09.2023**

(51) International Patent Classification (IPC):
$H01M\ 4/1315^{(2010.01)}$   $H01M\ 4/131^{(2010.01)}$
$H01M\ 4/505^{(2010.01)}$   $H01M\ 4/36^{(2006.01)}$
$H01M\ 4/525^{(2010.01)}$   $H01M\ 4/485^{(2010.01)}$

(52) Cooperative Patent Classification (CPC):
**H01M 4/523; C01G 53/50; C01G 53/66;
C01G 53/82; H01M 4/505; H01M 4/525;
H01M 10/0525; H01M 10/054;** C01P 2002/54;
C01P 2002/72; C01P 2002/76; C01P 2002/78;
C01P 2004/61; C01P 2006/11; C01P 2006/12;
(Cont.)

(86) International application number:
**PCT/CN2023/119789**

(87) International publication number:
**WO 2024/259816 (26.12.2024 Gazette 2024/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.06.2023   CN 202310736859**

(71) Applicant: **Contemporary Amperex Technology
Co., Limited
Ningde, Fujian 352100 (CN)**

(72) Inventors:
• **WU, Kai
Ningde, Fujian 352100 (CN)**
• **LUAN, Ke
Ningde, Fujian 352100 (CN)**
• **LIANG, Zibin
Ningde, Fujian 352100 (CN)**

(74) Representative: **Kraus & Lederer PartGmbB
Thomas-Wimmer-Ring 15
80539 München (DE)**

(54) **POSITIVE ELECTRODE ACTIVE MATERIAL AND PREPARATION METHOD THEREFOR,
POSITIVE ELECTRODE SHEET, BATTERY, AND ELECTRIC DEVICE**

(57)     The present application discloses a positive electrode active material and a preparation method thereof, a positive electrode plate, a battery, and an electric device. The positive electrode active material includes:

$$Na_xNi_aFe_bMn_cM1_dM2_eO_{2+\delta-f}F_f,$$

where M1 includes a rare earth element; M2 includes at least one of a group IA element, a group IIA element, a group IIIA element, a group IVA element, a group VA element, a group VIA element, and a transition element; and $0.6 \leq x \leq 1.2$, $0 < a \leq 0.5$, $0 < b \leq 0.4$, $0.3 \leq c \leq 0.75$, $0.001 \leq d \leq 0.05$, $0 \leq e \leq 0.3$, $-0.1 \leq \delta \leq 0.1$, $0 \leq f \leq 0.1$, $0.005 \leq d/c \leq 0.05$, and $a + b + c + d + e = 1$.

FIG. 1

EP 4 730 420 A1

**(Cont. next page)**

(52) Cooperative Patent Classification (CPC): (Cont.)
C01P 2006/40; H01M 2004/021; H01M 2004/028;
Y02E 60/10

## Description

### TECHNICAL FIELD

The present application relates to the field of secondary battery technologies, and specifically, to a positive electrode active material and a preparation method thereof, a positive electrode plate, a battery, and an electric device.

### BACKGROUND

Secondary batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace.

Sodium-ion batteries are one type of secondary batteries, and layered transition metal oxides are commonly used positive electrode active materials for sodium-ion batteries. However, existing sodium-ion batteries containing layered transition metal oxides exhibit low capacity retention rates.

### SUMMARY

In view of the technical problems existing in the background, the present application provides a positive electrode active material aimed at addressing the issue of low capacity retention rates in batteries containing such material.

To achieve the above objective, a first aspect of the present application provides a positive electrode active material, where the positive electrode active material includes:

$$Na_xNi_aFe_bMn_cM1_dM2_eO_{2+\delta-f}F_f,$$

where M1 includes a rare earth element; M2 includes at least one of a group IA element, a group IIA element, a group IIIA element, a group IVA element, a group VA element, a group VIA element, and a transition element; and $0.6 \leq x \leq 1.2$, $0 < a \leq 0.5$, $0 < b \leq 0.4$, $0.3 \leq c \leq 0.75$, $0.001 \leq d \leq 0.05$, $0 \leq e \leq 0.3$, $-0.1 \leq \delta \leq 0.1$, $0 \leq f \leq 0.1$, $0.005 \leq d/c \leq 0.05$, and $a + b + c + d + e = 1$.

The present application includes at least the following beneficial effects: The positive electrode active material of the present application includes a main material including NiFeMn, doped with a rare earth element M1 and a doping element M2, and the aforementioned content of Fe can enhance the specific capacity of the material. The large radius of the rare earth element M1 forms a dense and uniform doping layer on a surface of the positive electrode active material, and the doping layer can effectively block moisture from penetrating from the surface to the bulk phase of the positive electrode active material, improving the structural stability of the material. During high-voltage charging, the doping layer also suppresses the release of lattice oxygen and the infiltration of electrolyte into the material, improving the structural stability of the material and thus enhancing the capacity retention rate of a battery containing the material. The doping element M2, distributed in the bulk phase of the positive electrode active material, can form strong chemical bonds with O in the positive electrode active material, suppressing the deintercalation of Na ions in the positive electrode active material from the bulk phase and reducing changes in the interlayer spacing of the positive electrode active material, delaying phase transitions, and improving the cycling stability of the positive electrode active material, thereby enhancing the capacity retention rate of the battery. Furthermore, the ratio d/c of the rare earth element M1 to Mn in the positive electrode active material falls within the aforementioned range, which is conducive to improving the air stability and cycling stability of the positive electrode active material, thereby enhancing the capacity retention rate of the battery containing the material.

In some embodiments of the present application, the rare earth element includes at least one of La, Ce, Pr, Nd, Sm, Eu, Gd, Tb, Dy, Ho, Er, Tm, Yb, and Lu. Thus, using at least one of the aforementioned rare earth elements as M1 can form a dense and uniform doping layer on the surface of the positive electrode active material, reducing the probability of phase transitions in the positive electrode active material and improving the cycling performance of the positive electrode active material, thereby enhancing the capacity retention rate of the battery containing the material.

In some embodiments of the present application, M2 includes at least one of B, Mg, Al, Si, K, Ca, Ga, Ge, Se, Rb, Sr, In, Sn, Sb, Te, Sc, Ti, V, Cr, Co, Cu, Zn, Y, Zr, Nb, Mo, Ru, Rh, Pd, Ag, Cd, Hf, Ta, W, Re, Os, Ir, Pt, and Au. Thus, element M2, uniformly distributed in the bulk phase of the positive electrode active material, can form strong chemical bonds with O in the positive electrode active material, suppressing the deintercalation of Na elements in the positive electrode active material from the bulk phase, improving the air stability of the positive electrode active material, thereby enhancing the capacity retention rate of the battery containing the material.

In some embodiments of the present application, $0.01 \leq d/c \leq 0.03$. Thus, this is conducive to improving the air stability and cycling stability of the positive electrode active material, thereby enhancing the capacity retention rate of the battery containing the material.

In some embodiments of the present application, the positive electrode active material satisfies at least one of the following conditions: $0.1 \le a \le 0.4$, optionally, $0.15 \le a \le 0.3$; $0.1 \le b \le 0.35$, optionally, $0.15 \le b \le 0.35$; and $0.35 \le c \le 0.6$, optionally, $0.35 \le c \le 0.5$.

In some embodiments of the present application, $1.75 \le (a + b + c)/b \le 9.5$, optionally, $2 \le (a + b + c)/b \le 9.5$, more optionally, $2 \le (a + b + c)/b \le 6.3$. Thus, in the positive electrode active material, the ratio of the sum of the contents of Ni, Fe, and Mn to the content of Fe falls within the aforementioned range, which is conducive to improving the air stability and cycling stability of the positive electrode active material, thereby enhancing the capacity retention rate of the battery containing the material.

In some embodiments of the present application, $0.8 < x \le 1.0$, a phase of the positive electrode active material includes an O3 phase, a space group includes R$\overline{3}$m, and an interlayer spacing ranges from 0.53 nm to 0.55 nm. Thus, with x in the aforementioned range, the formed positive electrode active material with the O3 phase has a high Na content, which can enhance the capacity of the battery.

In some embodiments of the present application, $0.6 \le x \le 0.8$, the phase of the positive electrode active material includes a P2 phase, the space group includes P63/mmc, and the interlayer spacing ranges from 0.54 nm to 0.57 nm. Thus, with x in the aforementioned range, the positive electrode active material with the P2 phase has a large interlayer spacing, which can improve the rate performance and cycling performance of the battery.

In some embodiments of the present application, a pH value of a soaking solution of the positive electrode active material is less than or equal to 13, optionally, the pH value of the soaking solution of the positive electrode active material is less than or equal to 12.7, more optionally, the pH value of the soaking solution of the positive electrode active material is $11.0 \le pH \le 12.7$.

In some embodiments of the present application, the positive electrode active material satisfies at least one of the following conditions:

$D_v50$ of the positive electrode active material ranges from 3 $\mu$m to 30 $\mu$m, optionally from 5 $\mu$m to 15 $\mu$m;

a specific surface area of the positive electrode active material ranges from 0.1 m$^2$/g to 5 m$^2$/g, optionally from 0.3 m$^2$/g to 3 m$^2$/g;

a tap density of the positive electrode active material ranges from 1 g/cm$^3$ to 3 g/cm$^3$, optionally from 1.5 g/cm$^3$ to 2.5 g/cm$^3$; and

a compacted density of the positive electrode active material under a pressure of 300 MPa ranges from 3.0 g/cm$^3$ to 4.0 g/cm$^3$.

Thus, when at least one of the $D_v50$, the specific surface area, the tap density, and the compacted density under a pressure of 300 MPa of the positive electrode active material falls within the aforementioned ranges, a conduction distance of Na ions within the positive electrode active material is short, the surface side reaction is less, promoting the positive electrode active material to achieve the specific capacity thereof, and improving the capacity retention rate of the battery containing the material.

A second aspect of the present application provides a method for preparing the positive electrode active material described in the first aspect, including:

mixing an Na source, an Ni source, an Fe source, an Mn source, an M1 source, and an M2 source to obtain a precursor; and

calcining the precursor to obtain the positive electrode active material.

Thus, the positive electrode active material prepared by the present application has excellent air stability and cycling stability, and the battery containing the material has an excellent capacity retention rate.

A third aspect of the present application provides another method for preparing the positive electrode active material described in the first aspect, including:

mixing an Ni source, an Fe source, an Mn source, an M1 source, and an M2 source with water to obtain a mixed solution;

reacting the solution with a precipitant to obtain a precursor; and

mixing the precursor with an Na source and calcining to obtain the positive electrode active material.

Thus, the positive electrode active material prepared by the present application, the positive electrode active material has excellent air stability and cycling stability, and the battery containing the material has an excellent capacity retention rate.

A fourth aspect of the present application provides a positive electrode plate, including the positive electrode active material described in the first aspect, the positive electrode active material prepared by the method described in the second aspect, or the positive electrode active material prepared by the method described in the third aspect of the present application.

A fifth aspect of the present application provides a battery, including the positive electrode plate described in the fourth aspect of the present application. Thus, the battery has an excellent capacity retention rate.

A sixth aspect of the present application provides an electric device, including the battery described in the fifth aspect.

Additional aspects and advantages of the present application will be given in part in the following description, part of which will become apparent from the following description or be learned from the practice of the present application.

BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit the present application. In addition, in all the accompanying drawings, the same reference signs represent the same components. In the drawings:

FIG. 1 is a schematic structural diagram of a battery according to an embodiment of the present application;
FIG. 2 is a schematic structural diagram of a battery module according to an embodiment of the present application;
FIG. 3 is a schematic structural diagram of a battery pack according to an embodiment of the present application;
FIG. 4 is an exploded view of FIG. 3;
FIG. 5 is a schematic diagram of an electric device using a battery as a power source according to an embodiment;
FIG. 6 is an XRD pattern of positive electrode active materials of Example 1 and Comparative Example 1 of the present application;
FIG. 7 is an XRD pattern of positive electrode active materials of Example 1 and Comparative Example 2 of the present application;
FIG. 8 is a charge and discharge diagram of a positive electrode plate at 1.5-4.2/4.2-1.5 V of Example 1 of the present application; and
FIG. 9 is a comparison diagram of capacity retention rates of batteries of Example 1 and Comparative Example 4 of the present application.

Reference signs: 1: secondary battery; 2: battery module; 3: battery pack; 4: upper box body; and 5: lower box body.

DESCRIPTION OF EMBODIMENTS

The following describes in detail embodiments of the technical solutions of the present application. The following embodiments are merely intended for a clearer description of the technical solutions of the present application and therefore are merely used as examples which do not constitute any limitation on the protection scope of the present application.

In this specification, reference to "embodiment" means that specific features, structures, or characteristics described with reference to the embodiment may be included in at least one embodiment of the present application. The term "embodiment" appearing in various places in the specification does not necessarily refer to the same embodiment or an independent or alternative embodiment that is exclusive of other embodiments. It is explicitly or implicitly understood by persons skilled in the art the embodiments described herein may be combined with other embodiments.

For brevity, this specification specifically discloses only some numerical ranges. However, any lower limit may be combined with any upper limit to form a range not explicitly recorded; any lower limit may be combined with another lower limit to form a range not explicitly recorded; and likewise, any upper limit may be combined with any other upper limit to form a range not explicitly recorded. In addition, each individually disclosed point or individual single numerical value may itself be a lower limit or an upper limit which can be combined with any other point or individual numerical value or combined with another lower limit or upper limit to form a range not expressly recorded.

In the description of the embodiments of the present application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between the contextually associated objects.

Unless otherwise defined, all technical and scientific terms used herein shall have the same meanings as commonly understood by persons skilled in the art to which the present application relates. The terms used herein are intended to merely describe the specific embodiments rather than to limit the present application. The terms "include", "comprise", and "have" and any other variations thereof in the specification, claims and brief description of drawings of the present application are intended to cover non-exclusive inclusions.

With the technological development and increasing demand for electric vehicles and rechargeable mobile devices, secondary batteries, as representatives of the new energy field, have seen rapid development in related research. Compared to traditional lithium-ion batteries, sodium-ion batteries have a strong cost advantage and broad application prospects in large-scale energy storage systems.

Layered transition metal oxides, due to their high electrical conductivity, high energy density, large capacity, and long cycle life, have become one of the popular positive electrode active materials for sodium-ion batteries.

However, existing layered transition metal oxides have the following issues: on one hand, moisture in the air can penetrate from a surface of the layered transition metal oxide to a bulk phase, leading to structural damage if the layered transition metal oxide is exposed to air for too long; on the other hand, during high-voltage charging, oxygen coordinated with metals in the layered transition metal oxide may undergo oxidation reactions, that is, lattice oxygen release, leading to structural damage to the material; additionally, during high-voltage charging, phase transitions accompanying the deintercalation of sodium ions in the layered transition metal oxide can cause cracks, allowing electrolyte to infiltrate into the material and react, further deteriorating the structure of the material. The structural damage of the layered transition metal oxide material leads to reduced stability of the material, thereby directly resulting in a low capacity retention rate of a battery.

In the present application, the positive electrode active material uses NiFeMn as the main material, doped with a rare earth element M1 and a doping element M2, with the ratio of the rare earth element M1 to Mn controlled. On one hand, the large radius of the rare earth element M1 remains on a surface of the positive electrode active material, forming a dense and uniform doping layer on the surface of the positive electrode active material, and the doping layer can effectively block moisture from penetrating from the surface to the bulk phase of the positive electrode active material, improving the structural stability of the material. Furthermore, during high-voltage charging, the doping layer can suppress the release of lattice oxygen and the infiltration of electrolyte into the material, improving the structural stability of the material and thus enhancing the capacity retention rate of a battery containing the material. On the other hand, the doping element M2, distributed in the bulk phase of the positive electrode active material, can form strong chemical bonds with O in the positive electrode active material, suppressing the deintercalation of Na ions in the positive electrode active material from the bulk phase and reducing changes in the interlayer spacing of the positive electrode active material, delaying phase transitions, and improving the cycling stability of the positive electrode active material. Additionally, in the present application, the ratio d/c of the rare earth element M1 to Mn in the positive electrode active material is controlled within 0.005 to 0.05, which is conducive to improving the air stability and cycling stability of the positive electrode active material, thereby enhancing the capacity retention rate of the battery containing the material.

The positive electrode active material disclosed in the embodiments of the present application is suitable for secondary batteries, and the batteries disclosed in the embodiments of the present application can be used in electric devices using batteries as power sources or in various energy storage systems using batteries as energy storage elements. The electric device may include, but is not limited to, a mobile phone, a tablet, a notebook computer, an electric toy, an electric tool, an electric bicycle, an electric vehicle, a ship, or a spacecraft. The electric toy may include a fixed or mobile electric toy, for example, a game console, an electric toy car, an electric toy ship, and an electric toy airplane. The spacecraft may include an airplane, a rocket, a space shuttle, a spaceship, and the like.

A first aspect of the present application provides a positive electrode active material. The positive electrode active material includes:

$$Na_xNi_aFe_bMn_cM1_dM2_eO_{2+\delta-f}F_f,$$

where M1 includes a rare earth element; M2 includes at least one of a group IA element, a group IIA element, a group IIIA element, a group IVA element, a group VA element, a group VIA element, and a transition element; and $0.6 \leq x \leq 1.2$, $0 < a \leq 0.5$, $0 < b \leq 0.4$, $0.3 \leq c \leq 0.75$, $0.001 \leq d \leq 0.05$, $0 \leq e \leq 0.3$, $-0.1 \leq \delta \leq 0.1$, $0 \leq f \leq 0.1$, $0.005 \leq d/c \leq 0.05$, and $a + b + c + d + e = 1$.

The present application includes at least the following beneficial effects: The positive electrode active material of the present application includes a main material including NiFeMn, doped with a rare earth element M1 and a doping element M2, and the aforementioned content of Fe can enhance the specific capacity of the positive electrode active material. The large radius of the rare earth element M1 forms a dense and uniform doping layer on the surface of the positive electrode active material, and the doping layer can effectively block moisture from penetrating from the surface to the bulk phase of the positive electrode active material, improving the structural stability of the material. During high-voltage charging, the doping layer also suppresses the release of lattice oxygen and the infiltration of electrolyte into the material, improving the structural stability of the material and thus enhancing the capacity retention rate of the battery containing the material. The doping element M2, distributed in the bulk phase of the positive electrode active material, can form strong chemical bonds with O in the positive electrode active material, suppressing the deintercalation of Na ions in the positive electrode active material from the bulk phase and reducing changes in the interlayer spacing of the positive electrode active material, delaying phase transitions, and improving the cycling stability of the positive electrode active material, thereby enhancing the capacity retention rate of the battery.

Furthermore, the ratio d/c of the rare earth element M1 to Mn in the positive electrode active material within the aforementioned range can reduce the probability of insufficient solid solubility between the rare earth element and Mn, which could lead to aggregation of the rare earth element on the surface of the positive electrode active material and the formation of impurity phases, while also reducing the probability of not being able to form a rare earth doping layer due to insufficient rare earth elements. This is conducive to the rare earth element forming a dense and uniform rare earth doping layer on the surface of the positive electrode active material, effectively blocking moisture from penetrating from the surface to the bulk phase of the positive electrode active material, and suppressing the release of lattice oxygen and the infiltration of electrolyte into the bulk phase, improving the air stability and cycling stability of the positive electrode active material, thereby enhancing the capacity retention rate of the battery containing the material.

In summary, the positive electrode active material includes a main material including NiFeMn, doped with a rare earth element M1 and a doping element M2, with controlled doping amounts of each element and d/c. These features collectively contribute to enhancing the specific capacity of the positive electrode active material.

In some embodiments of the present application, in the positive electrode active material $Na_xNi_aFe_bMn_cM1_{d-}M2_eO_{2+\delta-f}F_f$, x may satisfy $0.6 \leq x \leq 1.2$, for example, $0.7 \leq x \leq 1.1$, $0.8 \leq x \leq 1$, $0.9 \leq x \leq 1.1$, $1 \leq x \leq 1.1$, or the like. Thus, including this content of sodium element in the positive electrode active material enables the battery to have a high capacity.

It should be noted that in the positive electrode plate, the battery, or an electric apparatus, due to processes such as formation and cycling of the battery, sodium ions may be consumed, resulting in a measured content x of element sodium in the positive electrode active material being less than 1. Additionally, if a sodium supplement is used in a positive electrode plate and a negative electrode plate, the measured content x of element sodium in the positive electrode active material may be greater than 1 after the battery is subjected to processes such as formation and cycling.

In some embodiments of the present application, in the positive electrode active material $Na_xNi_aFe_bMn_cM1_{d-}M2_eO_{2+\delta-f}F_f$, a may satisfy $0 < a \leq 0.5$, for example, $0.001 \leq a \leq 0.5$, $0.005 \leq a \leq 0.5$, $0.1 \leq a \leq 0.5$, $0.15 \leq a \leq 0.45$, $0.2 \leq a \leq 0.4$, $0.25 \leq a \leq 0.35$, $0.25 \leq a \leq 0.3$, or the like. Thus, including this content of nickel in the positive electrode active material can improve the energy density of the battery. In other embodiments of the present application, in the positive electrode active material $Na_xNi_aFe_bMn_cM1_dM2_eO_{2+\delta-f}F_f$, a may satisfy $0.1 \leq a \leq 0.4$, for example, $0.15 \leq a \leq 0.3$.

In some embodiments of the present application, in the positive electrode active material $Na_xNi_aFe_bMn_cM1_{d-}M2_eO_{2+\delta-f}F_f$, b may satisfy $0 < b \leq 0.4$, for example, $0.001 \leq a \leq 0.4$, $0.005 \leq a \leq 0.4$, $0.1 \leq a \leq 0.4$, $0.15 \leq a \leq 0.35$, $0.2 \leq a \leq 0.35$, $0.25 \leq a \leq 0.35$, $0.3 \leq a \leq 0.35$, or the like. Thus, during the deintercalation of Na ions from the material, Fe, as a charge compensation metal element, oxidizes from a trivalent state to a tetravalent state. When Na ions are re-intercalated into the material, Fe is reduced from the tetravalent state back to the trivalent state. Including this content of Fe in the positive electrode active material can enhance the specific capacity of the material. In other embodiments of the present application, in the positive electrode active material $Na_xNi_aFe_bMn_cM1_dM2_eO_{2+\delta-f}F_f$, b may satisfy $0.1 \leq b \leq 0.35$, for example, $0.15 \leq b \leq 0.35$.

In some embodiments of the present application, in the positive electrode active material $Na_xNi_aFe_bMn_cM1_{d-}M2_eO_{2+\delta-f}F_f$, c may satisfy $0.3 \leq c \leq 0.75$, for example, $0.35 \leq c \leq 0.75$, $0.4 \leq c \leq 0.7$, $0.45 \leq c \leq 0.65$, $0.5 \leq c \leq 0.6$, $0.55 \leq c \leq 0.6$, or the like. Thus, this content of Mn may undergo a solid solution with the rare earth element M1 to form a uniform and dense doping layer on the surface of the positive electrode active material, improving the structural stability of the positive electrode active material, and thereby enhancing the capacity retention rate of the battery containing the material. In other embodiments of the present application, in the positive electrode active material $Na_xNi_aFe_bMn_cM1_dM2_eO_{2+\delta-f}F_f$, c may satisfy $0.35 \leq c \leq 0.6$, for example, $0.35 \leq c \leq 0.5$.

In some embodiments of the present application, in the positive electrode active material $Na_xNi_aFe_bMn_cM1_{d-}M2_eO_{2+\delta-f}F_f$, M1 includes at least one of La, Ce, Pr, Nd, Sm, Eu, Gd, Tb, Dy, Ho, Er, Tm, Yb, and Lu. Thus, M1 with this composition can form a dense and uniform doping layer on the surface of the positive electrode active material and can effectively block moisture from penetrating from the surface to the bulk phase of the positive electrode active material, improving the structural stability of the material. Additionally, during high-voltage charging, the doping layer with this composition can suppress the release of lattice oxygen and the infiltration of electrolyte into the material, improving the structural stability of the material and thus enhancing the capacity retention rate of the battery containing the material.

Furthermore, using at least one of the aforementioned elements as M1 is environmentally friendly and causes minimal pollution.

In some embodiments of the present application, in the positive electrode active material $Na_xNi_aFe_bMn_cM1_{d-}M2_eO_{2+\delta-f}F_f$, d may satisfy $0.001 \leq d \leq 0.05$, for example, $0.005 \leq d \leq 0.05$, $0.01 \leq d \leq 0.05$, $0.015 \leq d \leq 0.045$, $0.02 \leq d \leq 0.04$, $0.025 \leq d \leq 0.035$, $0.03 \leq d \leq 0.035$, or the like. Thus, including this content of the M1 element in the positive electrode active material can form a dense and uniform doping layer on the surface of the positive electrode active material, effectively blocking moisture from penetrating from the surface to the bulk phase of the positive electrode active material, improving the structural stability of the material. Additionally, during high-voltage charging, the doping layer with this composition can suppress the release of lattice oxygen and the infiltration of electrolyte into the material, improving the structural stability of the material and thus enhancing the capacity retention rate of the battery containing the material.

In some embodiments of the present application, in the positive electrode active material $Na_xNi_aFe_bMn_cM1_{d-}M2_eO_{2+\delta-f}F_f$, the contents of the rare earth element M1 and Mn satisfy the following relationship: $0.005 \leq d/c \leq 0.05$, for example, $0.01 \leq d/c \leq 0.05$, $0.015 \leq d/c \leq 0.045$, $0.02 \leq d/c \leq 0.04$, $0.025 \leq d/c \leq 0.035$, $0.03 \leq d/c \leq 0.035$, or the like. The ratio d/c of the rare earth element M1 to Mn in the positive electrode active material within the aforementioned range can reduce the probability of insufficient solid solubility between the rare earth element and Mn, which could lead to aggregation of the rare earth element on the surface of the positive electrode active material and the formation of impurity phases, while also reducing the probability of not being able to form a rare earth doping layer due to insufficient rare earth elements. This is conducive to the rare earth element forming a dense and uniform rare earth doping layer on the surface of the positive electrode active material, effectively blocking moisture from penetrating from the surface to the bulk phase of the positive electrode active material, and suppressing the release of lattice oxygen and the infiltration of electrolyte into the bulk phase, improving the air stability and cycling stability of the positive electrode active material, thereby enhancing the capacity retention rate of the battery containing the material. In other embodiments of the present application, in the positive electrode active material $Na_xNi_aFe_bMn_cM1_dM2_eO_{2+\delta-f}F_f$, the contents of the rare earth element M1 and Mn satisfy the following relationship: $0.01 \leq d/c \leq 0.03$. Thus, this is conducive to improving the air stability and cycling stability of the positive electrode active material, thereby enhancing the capacity retention rate of the battery containing the material.

In some embodiments of the present application, in the positive electrode active material $Na_xNi_aFe_bMn_cM1_{d-}M2_eO_{2+\delta-f}F_f$, M2 includes at least one of B, Mg, Al, Si, K, Ca, Ga, Ge, Se, Rb, Sr, In, Sn, Sb, Te, Sc, Ti, V, Cr, Co, Cu, Zn, Y, Zr, Nb, Mo, Ru, Rh, Pd, Ag, Cd, Hf, Ta, W, Re, Os, Ir, Pt, and Au. Specifically, in the positive electrode active material, the element M2 is uniformly distributed in the bulk phase thereof, and M2 can form strong chemical bonds with O in the positive electrode active material. These chemical bonds, on one hand, suppress the deintercalation of Na elements in the positive electrode active material from the bulk phase, and on the other hand, stabilize the structure of a metal layer of the positive electrode active material, reducing changes in the interlayer spacing of the positive electrode active material, lowering the occurrence of phase transitions, and improving the cycling performance of the positive electrode active material, thereby enhancing the capacity retention rate of the battery containing the material.

In some embodiments, in the positive electrode active material $Na_xNi_aFe_bMn_cM1_dM2_eO_{2+\delta-f}F_f$, $\delta$ and f satisfy: $-0.1 \leq \delta \leq 0.1$, $0 \leq f \leq 0.1$, for example, $-0.09 \leq \delta \leq 0.09$, $-0.08 \leq \delta \leq 0.08$, $-0.07 \leq \delta \leq 0.07$, $-0.06 \leq \delta \leq 0.06$, $-0.05 \leq \delta \leq 0.05$, $-0.04 \leq \delta \leq 0.04$, $-0.03 \leq \delta \leq 0.03$, $-0.02 \leq \delta \leq 0.02$, $-0.01 \leq \delta \leq 0.01$, $-0.01 \leq \delta \leq 0$, $0 \leq \delta \leq 0.01$, $0.01 \leq f \leq 0.09$, $0.02 \leq f \leq 0.08$, $0.03 \leq f \leq 0.07$, $0.04 \leq f \leq 0.06$, $0.05 \leq f \leq 0.06$, or the like. Specifically, doping the oxygen sites with this content of F in the positive electrode active material of the present application can effectively stabilize the oxygen in the positive electrode active material, thereby reducing structural damage due to lattice oxygen release in the positive electrode active material, improving the stability of the material, thereby enhancing the capacity retention rate of the battery.

It should be noted that in the positive electrode plate, the battery, or the electric apparatus, due to the battery being subjected to processes such as cycling, there may be a loss of oxygen elements in the positive electrode active material, resulting in a measured content $2 + \delta - f$ of element oxygen in the positive electrode active material being less than 2.

In some embodiments of the present application, in the positive electrode active material $Na_xNi_aFe_bMn_cM1_{d-}M2_eO_{2+\delta-f}F_f$, $1.75 \leq (a+b+c)/b \leq 9.5$, for example, $1.8 \leq (a+b+c)/b \leq 9.5$, $1.9 \leq (a+b+c)/b \leq 9.4$, $2 \leq (a+b+c)/b \leq 9.3$, $2.1 \leq (a+b+c)/b \leq 9.2$, $2.2 \leq (a+b+c)/b \leq 9.1$, $2.3 \leq (a+b+c)/b \leq 9$, $2.5 \leq (a+b+c)/b \leq 8.5$, $3 \leq (a+b+c)/b \leq 8$, $3.5 \leq (a+b+c)/b \leq 7.5$, $4 \leq (a+b+c)/b \leq 7$, $4.5 \leq (a+b+c)/b \leq 6.5$, $5 \leq (a+b+c)/b \leq 6$, $5 \leq (a+b+c)/b \leq 5.5$, or the like. Specifically, controlling the ratio of the sum of the contents of Ni, Fe, and Mn to the content of Fe in the positive electrode active material within the aforementioned range, on one hand, reduces the reduction in deintercalatable Na ions in the positive electrode active material due to insufficient variable valence metal component Fe, enabling the positive electrode active material to have excellent specific capacity; on the other hand, this reduces the effect of the deintercalation of Na ions due to excessive Fe content in the positive electrode active material causing significant Fe migration to an Na ion layer, improving the cycling performance of the positive electrode active material, thereby enhancing the capacity retention rate of the battery containing the material.

In some embodiments of the present application, in the positive electrode active material $Na_xNi_aFe_bMn_cM1_{d-}M2_eO_{2+\delta-f}F_f$, $0.8 < x \leq 1.0$, a phase of the positive electrode active material includes an O3 phase, a space group includes $R\overline{3}m$, and an interlayer spacing ranges from 0.53 nm to 0.55 nm. For example, x may satisfy 0.82 to 1.0, 0.85 to 0.95, 0.88 to 0.90, or the like; and the interlayer spacing may satisfy 0.53 nm to 0.545 nm, 0.535 nm to 0.54 nm, or 0.536 nm to 0.539 nm. Specifically, with x in the aforementioned range, the formed positive electrode active material with the O3 phase has a high Na content, enabling more Na ions to deintercalate and the battery to exhibit high capacity.

In some embodiments of the present application, $0.6 \leq x \leq 0.8$, the phase of the positive electrode active material includes a P2 phase, the space group includes P63/mmc, and the interlayer spacing ranges from 0.54 nm to 0.57 nm. For example, x may satisfy 0.6 to 0.78, 0.65 to 0.75, 0.68 to 0.7, or the like; and the interlayer spacing may satisfy 0.54 nm to 0.565 nm, 0.545 nm to 0.56 nm, 0.55 nm to 0.555 nm, or the like. Specifically, with x in the aforementioned range, the positive electrode active material with the P2 phase has a large interlayer spacing, which can enhance the transport rate of Na ions and maintain the integrity of the layered structure, enabling the battery to have excellent rate performance and cycling performance.

It should be noted that the characterization methods for the phase, the space group, and the interlayer spacing of the positive electrode active material in the present application may include X-ray diffraction, scanning electron microscopy, transmission electron microscopy, and the like. Specifically, in an X-ray diffraction pattern, a characteristic peak in the range of 40.5° to 42.5° indicates that the positive electrode active material is in the O3 phase, with the space group including $R\bar{3}m$, and a characteristic peak in the range of 48° to 50° indicates that the positive electrode active material is in the P2 phase, with the space group including P63/mmc. The interlayer spacing of the positive electrode active material in the O3 phase can be calculated from the position of the (003) peak in X-ray diffraction; and the interlayer spacing of the positive electrode active material in the P2 phase can be calculated from the position of the (002) peak in X-ray diffraction.

In some embodiments of the present application, a pH value of a soaking solution of the positive electrode active material is less than or equal to 13, for example, the pH value of the soaking solution of the positive electrode active material may satisfy 7 to 13, 7.2 to 13, 7.5 to 13, 8 to 13, 8.5 to 13, 9 to 13, 10 to 12.9, 10.5 to 12.7, 11.0 to 12.7, 11.2 to 12.5, 11.5 to 12.3, 11.7 to 12.0, or the like. Controlling the pH value of the soaking solution of the positive electrode active material within the aforementioned range can reduce the formation of gel during a slurry preparation process, facilitating subsequent slurry applying of the positive electrode active material. In other embodiments of the present application, the pH value of the soaking solution of the positive electrode active material is less than or equal to 12.7, for example, the pH value of the soaking solution of the positive electrode active material is $11.0 \leq pH \leq 12.7$.

Specifically, the pH value of the soaking solution of the positive electrode active material can be measured using the following method:

The positive electrode active material is dispersed in pure water for soaking, filtered to obtain the soaking solution, and titrated the measured soaking solution with a standard hydrochloric acid solution.

In some embodiments of the present application, $D_v50$ of the positive electrode active material ranges from 3 $\mu$m to 30 $\mu$m, for example, the $D_v50$ of the positive electrode active material may satisfy 3 $\mu$m to 29 $\mu$m, 4 $\mu$m to 28 $\mu$m, 5 $\mu$m to 15 $\mu$m, 6 $\mu$m to 14 $\mu$m, 8 $\mu$m to 13 $\mu$m, 9 $\mu$m to 12 $\mu$m, 10 $\mu$m to 11 $\mu$m, or the like. In other embodiments of the present application, the $D_v50$ of the positive electrode active material ranges from 5 $\mu$m to 15 $\mu$m.

In the present application, $D_v50$ refers to a particle size when a cumulative volume distribution percentage reaches 50%. For example, it can be measured using a laser particle size analyzer (for example, Malvern Master Size 3000) in accordance with GB/T 19077-2016.

In some embodiments of the present application, a specific surface area of the positive electrode active material ranges from 0.1 $m^2$/g to 5 $m^2$/g, for example, the specific surface area of the positive electrode active material may satisfy 0.1 $m^2$/g to 4.5 $m^2$/g, 0.2 $m^2$/g to 4 $m^2$/g, 0.3 $m^2$/g to 3 $m^2$/g, 0.5 $m^2$/g to 2.5 $m^2$/g, 1 $m^2$/g to 2 $m^2$/g, 1.2 $m^2$/g to 1.8 $m^2$/g, or the like. In other embodiments of the present application, the specific surface area of the positive electrode active material ranges from 0.3 $m^2$/g to 3 $m^2$/g.

In the present application, the specific surface area of the positive electrode active material can be tested using the following method: Approximately 7 g of the sample is placed in a 9 cc long tube with a bulb using a Micromeritics Gemini VII 2390 multi-station automatic specific surface area and pore analyzer, degassed at 200°C for 2 h, and then tested in the main unit to obtain the BET (specific surface area) data of the positive electrode active material.

In some embodiments of the present application, a tap density of the positive electrode active material ranges from 1 $g/cm^3$ to 3 $g/cm^3$, for example, the tap density of the positive electrode active material may satisfy 1 $g/cm^3$ to 2.8 $g/cm^3$, 1.5 $g/cm^3$ to 2.5 $g/cm^3$, 1.7 $g/cm^3$ to 2.4 $g/cm^3$, 1.8 $g/cm^3$ to 2. $g/cm^3$, or the like. In other embodiments of the present application, the tap density of the positive electrode active material ranges from 1.5 $g/cm^3$ to 2.5 $g/cm^3$.

In the present application, tap density refers to the mass per unit volume measured after the powder in the container was tapped under specified conditions. The method for measuring the tap density of the positive electrode active material is as follows:

Load the weighed positive electrode active material into a measuring cylinder of a tapping device, and fix the measuring cylinder on a support. Rotate a cam, causing a guide rod to drive the support to slide up and down, impacting an anvil. Vibrate at 250 ± 15 times per minute for 12 minutes. Measure the volume of the positive electrode active material in the measuring cylinder, and the ratio of the mass to the volume of the positive electrode active material is the tap density.

The formula for calculating tap density is: $pbt = m_0/V$

where pbt refers to tap density, in $g/cm^3$;
$m_0$ refers to mass of the positive electrode active material, in g; and
V refers to volume of the positive electrode active material after tapping (volume of a measuring cup), in $cm^3$.

In some embodiments of the present application, a compacted density of the positive electrode active material under a pressure of 300 MPa ranges from 3.0 $g/cm^3$ to 4.0 $g/cm^3$, for example, the compacted density of the positive electrode active material under a pressure of 300 MPa may satisfy 3.0 $g/cm^3$ to 3.9 $g/cm^3$, 3.1 $g/cm^3$ to 3.8 $g/cm^3$, 3.2 $g/cm^3$ to 3.7 $g/cm^3$, 3.3 $g/cm^3$ to 3.6 $g/cm^3$, 3.4 $g/cm^3$ to 3.5 $g/cm^3$, or the like.

In some embodiments of the present application, compacted density refers to the compacted density of the electrode plate after the material is made into an electrode plate. Compacted density = surface density / (thickness of the electrode plate after rolling - thickness of the current collector). Specifically, the method for measuring the compacted density of the positive electrode active material under a pressure of 300 MPa is as follows:

A rolled electrode plate is taken, and a circular or square region with an area of s is cut using a cutting die, with the thickness measured as a and weighed as $m_1$. The positive electrode material is washed off with a mixture of acetone and alcohol and dried, and the remaining aluminum foil is weighed as $m_2$, with the thickness of the aluminum foil measured as b. The difference in weight of the region and the aluminum foil is divided by the area s of the circular or square shape to calculate the surface density, that is, surface density = $(m_1 - m_2)/s$. The surface density is divided by the thickness difference to obtain the compacted density, that is, compacted density = $(m_1 - m_2)/[s(a - b)]$.

Specifically, when at least one of the $D_v50$, the specific surface area, the tap density, and the compacted density under a pressure of 300 MPa of the positive electrode active material of the present application falls within the aforementioned ranges, a conduction distance within the positive electrode active material is short, the surface side reaction is less, promoting the positive electrode active material to achieve the specific capacity thereof, and improving the capacity retention rate of the battery containing the material.

A second aspect of the present application provides a method for preparing the positive electrode active material described in the first aspect, including:

S100: An Na source, an Ni source, an Fe source, an Mn source, an M1 source, and an M2 source are mixed to obtain a precursor.

In some embodiments of the present application, the Na source, the Ni source, the Fe source, the Mn source, the M1 source, and the M2 source are mixed according to the composition of the positive electrode active material described above.

It should be noted that the Na source, the Ni source, the Fe source, the Mn source, the M1 source, and the M2 source in the present application are conventional materials in the field, and those skilled in the art can select them based on actual needs. For example, the Na source may include at least one of $Na_2CO_3$, $NaHCO_3$, $NaOH$, and $Na_2O_2$; the Ni source may include $NiO$; the Fe source may include at least one of $FeO$, $Fe_2O_3$, and $Fe_3O_4$; the Mn source may include at least one of $Mn_2O_3$, $Mn_3O_4$, $MnO$, and $MnO_2$; the M1 source may include at least one of an oxide of M1, a salt containing M1, and other compounds; and the M2 source may include at least one of an oxide of M2, a salt containing M2, and other compounds.

It should be noted that if doping with the F element is required in the positive electrode active material, at least one of the Na source, the Ni source, the Fe source, the Mn source, the M1 source, and the M2 source uses at least one of the corresponding fluoride-containing salt thereof and other compounds, for example, sodium fluoride, nickel fluoride, iron fluoride, manganese fluoride, M1 fluoride (fluoride salt of M1), and M2 fluoride (fluoride salt of M2).

S200: The precursor is calcined.

In some embodiments of the present application, the obtained precursor is calcined in a muffle furnace under an air atmosphere, then cooled to room temperature and mechanically crushed to obtain the positive electrode active material, where the calcination temperature may satisfy 600°C to 1200°C, for example, 600°C to 1100°C, 700°C to 1000°C, 800°C to 900°C, or the like; and the holding time may satisfy 10 h to 20 h, for example, 10 h to 19 h, 11 h to 18 h, 12 h to 17 h, 13 h to 16 h, 14 h to 15 h, or the like.

Additionally, before calcining the precursor, the precursor can be pre-calcined and held according to needs, with a pre-calcination temperature of 600°C to 900°C, for example, 600°C to 850°C, 650°C to 800°C, 600°C to 750°C, 550°C to 700°C, 500°C to 650°C, 550°C to 600°C, or the like; and a holding time of 10 h to 20 h, for example, 10 h to 19 h, 11 h to 18 h, 12 h to 17 h, 13 h to 16 h, 14 h to 15 h, or the like.

Thus, using the solid-phase method can prepare the positive electrode active material with excellent air stability and cycling stability, improving the capacity retention rate of the battery.

A third aspect of the present application provides another method for preparing the positive electrode active material described in the first aspect, including:

Sa: An Ni source, an Fe source, an Mn source, an M1 source, and an M2 source are mixed with water to obtain a mixed solution.

In some embodiments of the present application, the Ni source, the Fe source, the Mn source, the M1 source, and the M2 source are mixed with water according to the composition of the positive electrode active material described above to obtain a mixed solution.

It should be noted that the Ni source, the Fe source, the Mn source, the M1 source, and the M2 source in the present application are conventional materials in the field, and those skilled in the art can select them based on actual needs. For example, the Ni source may include at least one of nickel chloride, nickel sulfate, nickel nitrate, and nickel oxalate; the Fe source may include at least one of iron chloride, iron sulfate, iron nitrate, and iron oxalate; the Mn source may include at least one of manganese chloride, manganese sulfate, manganese nitrate, and manganese oxalate; the M1 source may include at least one of chlorides, sulfates, nitrates, and oxalates of M1; and the M2 source may include at least one of chlorides, sulfates, nitrates, oxalates of M2, and other compounds.

Sb: The solution is reacted with a precipitant to obtain a precursor.

In some embodiments of the present application, the solution obtained in step Sa is reacted with a solution containing a precipitant to obtain a precursor, where the solution containing the precipitant includes at least one of ammonia water, carbonate, and oxalate.

Sc: The precursor is mixed with an Na source and then calcined.

In some embodiments of the present application, the obtained precursor is mixed with an Na source according to the composition of the positive electrode active material described above, uniformly mixed through ball milling or mechanical stirring, calcined in a muffle furnace, then cooled to room temperature and mechanically crushed to obtain the positive electrode active material, where the calcination temperature may satisfy 600°C to 1200°C, for example, 700°C to 1100°C, 800°C to 1000°C, 900°C to 950°C, or the like; the calcination atmosphere can be air or oxygen; and the holding time may satisfy 10 h to 20 h, for example, 10 h to 19 h, 11 h to 18 h, 12 h to 17 h, 13 h to 16 h, 14 h to 15 h, or the like.

It should be noted that, as needed, before mixing and calcining the precursor with the Na source, the precursor mixed with the Na source can be pre-calcined and held, with a pre-calcination temperature of 600°C to 900°C, for example, 600°C to 850°C, 650°C to 800°C, 600°C to 750°C, 550°C to 700°C, 500°C to 650°C, 550°C to 600°C, or the like; and a holding time of 10 h to 20 h, for example, 10 h to 19 h, 11 h to 18 h, 12 h to 17 h, 13 h to 16 h, 14 h to 15 h, or the like. The Na source may include at least one of $Na_2CO_3$, $NaHCO_3$, NaOH, and $Na_2O_2$.

It should be noted that if doping with the F element is required in the positive electrode active material, at least one of the Na source, the Ni source, the Fe source, the Mn source, the M1 source, and the M2 source uses at least one of the corresponding fluoride-containing salt thereof and other compounds, for example, sodium fluoride, nickel fluoride, iron fluoride, manganese fluoride, M1 fluoride (fluoride salt of M1), and M2 fluoride (fluoride salt of M2).

Thus, using the co-precipitation method can prepare the positive electrode active material with excellent air stability and cycling stability, improving the capacity retention rate of the battery.

A fourth aspect of the present application provides a positive electrode plate, including the positive electrode active material described in the first aspect, the positive electrode active material prepared by the method described in the second aspect, or the positive electrode active material prepared by the method described in the third aspect of the present application.

The positive electrode plate typically includes a positive electrode current collector and a positive electrode active material layer disposed on the positive electrode current collector, where the positive electrode active material layer includes the positive electrode active material.

The positive electrode current collector may be a common metal foil or a composite current collector (the composite current collector may be formed by providing a metal material on a polymer matrix). In an example, the positive electrode current collector may include at least one of copper foil, aluminum foil, nickel foil, stainless steel foil, a stainless steel mesh, and carbon-coated aluminum foil.

The positive electrode active material includes the positive electrode active material described in the first aspect, the positive electrode active material prepared by the method described in the second aspect, or the positive electrode active material prepared by the method described in the third aspect of the present application.

The positive electrode active material layer may optionally include a conductive agent and a binder, where the conductive agent is used to improve the electrical conductivity of the positive electrode active material layer, and the binder is used to firmly adhere the positive electrode active material and the binder to the positive electrode current collector. The types of conductive agent and binder are not specifically limited in the present application and can be selected based on actual needs.

In an example, the conductive agent may include at least one of superconducting carbon, acetylene black, carbon black, Ketjen black, carbon dots, carbon nanotubes, graphene, and carbon nanofibers; and the binder may include at least one of styrene-butadiene rubber (SBR), water-based acrylic resin (water-based acrylic resin), carboxymethyl cellulose (CMC), polyvinylidene fluoride (PVDF), polytetrafluoroethylene (PTFE), ethylene-vinyl acetate copolymer (EVA), and polyvinyl alcohol (PVA).

These materials are all commercially available.

A fifth aspect of the present application provides a battery, including the positive electrode plate described in the fourth aspect of the present application. Thus, the battery has an excellent capacity retention rate.

The battery is a battery that can be charged after being discharged to activate the active materials for continuous use.

It can be understood that the battery proposed in the present application is a sodium-ion battery.

Typically, a battery includes a positive electrode plate, a negative electrode plate, a separator, and an electrolyte. In a charge and discharge process of the battery, active ions are intercalated and deintercalated between the positive electrode plate and the negative electrode plate. The separator is disposed between the positive electrode plate and the negative electrode plate for separation. The electrolyte conducts ions between the positive electrode plate and the negative electrode plate.

# EP 4 730 420 A1

[Negative electrode plate]

In the battery, the negative electrode plate typically includes a negative electrode current collector and a negative electrode active material layer disposed on the negative electrode current collector, where the negative electrode active material layer includes a negative electrode active material.

The negative electrode current collector may be a common metal foil or a composite current collector (for example, the composite current collector may be formed by providing a metal material on a polymer matrix). In an example, the negative electrode current collector may be a copper foil.

A specific type of the negative electrode active material is not limited. An active material known in the art that can be used as a negative electrode of a sodium-ion battery can be used, and persons skilled in the art can make selection based on actual needs. In an example, the negative electrode active material may include, but is not limited to, at least one of sodium metal, carbon materials, alloy materials, transition metal oxides and/or sulfides, phosphorus-based materials, and titanate materials. Specifically, the carbon material may include at least one of hard carbon, soft carbon, amorphous carbon, and nanostructured carbon materials. The alloy material may include an alloy material formed from at least one of Si, Ge, Sn, Pb, and Sb. The transition metal oxides and sulfides have the general formula $M_xN_y$, where M includes at least one of Fe, Co, Ni, Cu, Mn, Sn, Mo, Sb, and V; and N includes O or S. The phosphorus-based material may include at least one of red phosphorus, white phosphorus, and black phosphorus. The titanate material may include at least one of $Na_2Ti_3O_7$, $Na_2Ti_6O_{13}$, $Na_4Ti_5O_{12}$, $Li_4Ti_5O_{12}$, and $NaTi_2(PO_4)_3$. These materials are all commercially available.

The negative electrode active material layer typically may also optionally include a binder and a conductive agent, where the conductive agent is used to improve the electrical conductivity of the negative electrode active material layer, and the binder is used to firmly adhere the negative electrode active material and the binder to the negative electrode current collector. The types of conductive agent and binder are not specifically limited in the present application and can be selected based on actual needs.

In an example, the conductive agent may include at least one of superconducting carbon, acetylene black, carbon black, Ketjen black, carbon dots, carbon nanotubes, graphene, and carbon nanofibers.

In an example, the binder may include at least one of styrene-butadiene rubber (SBR), styrene-butadiene copolymers (SBCs), water-based acrylic resin (water-based acrylic resin), and carboxymethyl cellulose (CMC).

The negative electrode active material layer may also optionally include a thickener, for example, carboxymethyl cellulose (CMC). However, the present application is not limited thereto, and may alternatively use other materials that can be used as thickeners for negative electrode plates of sodium-ion batteries.

[Electrolyte]

The electrolyte may include an electrolytic salt and a solvent.

In an example, the electrolytic sodium salt may include at least one of sodium hexafluorophosphate, sodium difluoro(oxalato)borate, sodium tetrafluoroborate, sodium bis(oxalate)borate, sodium perchlorate, sodium hexafluoroarsenate, sodium bis(fluorosulfonyl)imide, sodium trifluoromethanesulfonate, and sodium bis(trifluoromethanesulfonyl) imide.

In an example, the solvent may include at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), gamma-butyrolactone (GBL), sulfolane (SF), methyl sulfonyl methane (MSM), methyl ethyl sulfone (EMS), and diethyl sulfone (ESE).

In some embodiments, the electrolyte may also include an additive. For example, the additive may include a negative electrode film-forming additive, or may include a positive electrode film-forming additive, or may include an additive capable of improving some performance of the battery, for example, an additive for improving overcharge performance of the battery, an additive for improving high-temperature performance of the battery, or an additive for improving low-temperature performance of the battery.

[Separator]

The separator is not particularly limited in the present application, and any common porous structure separator with electrochemical and mechanical stability can be selected based on actual needs, for example, it may include a single-layer or multi-layer film containing at least one of glass fiber, non-woven fabric, polyethylene, polypropylene, and polyvinylidene fluoride.

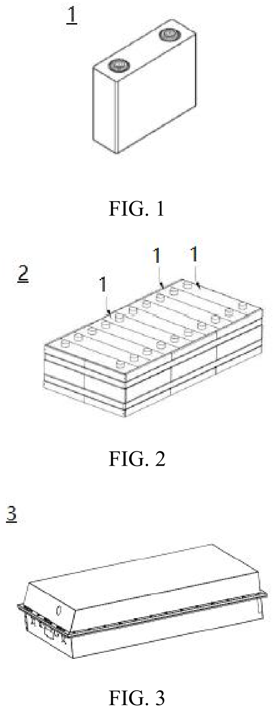

The battery is not particularly limited in shape in the embodiments of the present application, and may be cylindrical, rectangular, or of any other shape. FIG. 1 shows a battery 1 of a rectangular structure as an example.

12

In some embodiments, the battery may include an outer package. The outer package is used for packaging the positive electrode plate, the negative electrode plate, and the electrolyte.

In some embodiments, the outer package may include a housing and a cover plate. The housing may include a base plate and a side plate connected onto the base plate, and the base plate and the side plate enclose an accommodating cavity. The housing has an opening communicating with the accommodating cavity, and the cover plate can cover the opening to close the accommodating cavity.

The positive electrode plate, the negative electrode plate, and the separator may be made into an electrode assembly through winding or lamination. The electrode assembly is packaged in the accommodating cavity. There may be one or more electrode assemblies in the battery, and the quantity may be adjusted as required.

In some embodiments, the outer package of the battery may include a hard shell, for example, a hard plastic shell, an aluminum shell, or a steel shell.

The outer package of the battery may alternatively include a soft pack, for example, a soft pouch. A material of the soft package may be plastic, for example, may include at least one of polypropylene (PP), polybutylene terephthalate (PBT), and polybutylene succinate (PBS).

In some embodiments, batteries may be assembled into a battery module, and the battery module may include a plurality of batteries. The specific quantity may be adjusted based on application and capacity of the battery module.

FIG. 2 shows a battery module 2 as an example. Referring to FIG. 2, in the battery module 2, a plurality of batteries 1 may be sequentially arranged in a length direction of the battery module 2. Certainly, the batteries may alternatively be arranged in any other manners. Further, the plurality of batteries 1 may be fixed by fasteners.

The battery module 2 may further include a shell with an accommodating space, and the plurality of batteries 1 are accommodated in the accommodating space. In some embodiments, the battery module may be further assembled into a battery pack, and a quantity of battery modules included in the battery pack may be adjusted based on application and capacity of the battery pack.

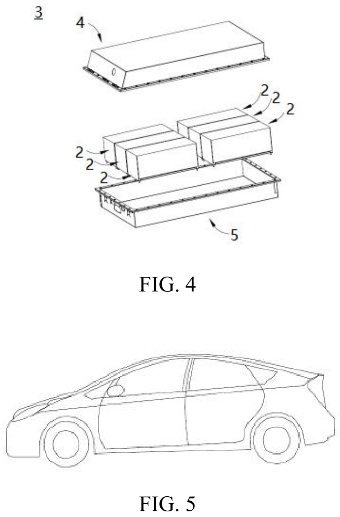

FIGs. 3 and 4 show a battery pack 3 as an example. Referring to FIG. 3 and FIG. 4, the battery pack 3 may include a battery box and a plurality of battery modules 2 arranged in the battery box. The battery box includes an upper box body 4 and a lower box body 5. The upper box body 4 can fit the lower box body 5 to form an enclosed space for accommodating the battery modules 2. The plurality of battery modules 2 may be arranged in the battery box in any manner.

A sixth aspect of the present application provides an electric device, including the battery described in the fifth aspect. Specifically, the battery may be used as a power source of the electric device, and may also be used as an energy storage unit of the electric device. The electric device may include, but is not limited to, a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, and an energy storage system.

FIG. 5 shows an electric device as an example. The electric device includes a battery electric vehicle, a hybrid electric vehicle, or a plug-in hybrid electric vehicle.

In another example, the electric device may include a mobile phone, a tablet computer, or a notebook computer. Such electric device is generally required to be light and thin and may use a battery as its power source.

To describe the technical problems solved by the embodiments of the present application, technical solutions, and beneficial effects more clearly, the following further describes the present application in detail with reference to the embodiments and accompanying drawings. Apparently, the described embodiments are only some but not all of these embodiments of the present application. The following description of at least one exemplary example is merely illustrative and definitely is not construed as any limitation on the present application or on use of the present application. All other embodiments obtained by persons of ordinary skill in the art on the basis of the embodiments of the present application without creative efforts shall fall within the protection scope of the present application.

Example 1

[Preparation of $NaNi_{0.2}Fe_{0.2}Mn_{0.5}La_{0.02}Cu_{0.08}O_2$]

Raw materials were mixed according to the stoichiometric ratio of the molecular formula, with 23.666 g of $Na_2CO_3$, 6.672 g of NiO, 7.131 g of $Fe_2O_3$, 17.627 g of $Mn_2O_3$, 1.455 g of $La_2O_3$, and 2.841 g of CuO (with a molar ratio of Na, Ni, Fe, Mn, La, and Cu being 1:0.2:0.2:0.5:0.02:0.08) mixed in an agate milling jar of a planetary ball mill. The raw materials were ground at a speed of 600 r/min, then heated in a muffle furnace to 950°C at a temperature rise rate of 5°C/min, calcined at this temperature for 15 h, and then naturally cooled to room temperature to obtain a black positive electrode active material $NaNi_{0.2}Fe_{0.2}Mn_{0.5}La_{0.02}Cu_{0.08}O_2$.

[Preparation of positive electrode plate]

The prepared $NaNi_{0.2}Fe_{0.2}Mn_{0.5}La_{0.02}Cu_{0.08}O_2$, a conductive agent carbon black, a binder polyvinylidene fluoride (PVDF), and N-methylpyrrolidone (NMP) were stirred and mixed at a weight ratio of 60:5:5:30 to uniformity to obtain a positive electrode slurry; the positive electrode slurry was uniformly applied onto a positive electrode current collector aluminum foil, followed by drying, cold pressing, and slitting to obtain the positive electrode plate.

[Preparation of negative electrode plate]

The negative electrode plate used a metal sodium sheet.

[Preparation of electrolyte]

In an argon atmosphere glove box (with $H_2O < 0.1$ ppm, $O_2 < 0.1$ ppm), organic solvents ethylene carbonate (EC) and ethyl methyl carbonate (EMC) were mixed uniformly at a volume ratio of 3:7 to obtain a mixed solvent, then $NaPF_6$ was dissolved in the mixed solvent, stirred uniformly to obtain an electrolyte with a sodium salt concentration of 1 mol/L.

[Separator]

Glass fiber was used as the separator.
The positive electrode plate, the separator, and the negative electrode plate were sequentially stacked such that the separator was sandwiched between the positive and negative electrode plates for separation, and then the resulting stack was wound to form an electrode assembly, the electrode assembly was placed in an outer package and the prepared electrolyte was injected into the secondary battery that was dried, followed by processes of vacuum packaging, standing, formation, and shaping, to obtain a secondary battery.
The secondary batteries containing positive electrode active materials in Examples 2 to 24 and Comparative Examples 1 to 4 were the same as in Example 1, except for differences in parameters (see Table 1).
The compositions of the positive electrode active materials in the batteries of Examples 1 to 24 and Comparative Examples 1 to 4 of the present application are shown in Table 1.

Table 1

| | Chemical formula | M1 composition | M2 composition | Value of x | Value of a | Value of b | Value of c | Value of d | Value of d/c | Value of e | (a+b+c)/b | Value of $\delta$ | Value of f |
|---|---|---|---|---|---|---|---|---|---|---|---|---|---|
| Example 1 | $NaNi_{0.2}Fe_{0.2}Mn_{0.5}La_{0.02}Cu_{0.08}O_2$ | La | Cu | 1 | 0.2 | 0.2 | 0.5 | 0.02 | 0.04 | 0.08 | 4.5 | 0 | 0 |
| Example 2 | $NaNi_{0.405}Fe_{0.2}Mn_{0.3}La_{0.015}Cu_{0.08}O_2$ | La | Cu | 1 | 0.405 | 0.2 | 0.3 | 0.015 | 0.05 | 0.08 | 4.975 | 0 | 0 |
| Example 3 | $NaNi_{0.4185}Fe_{0.2}Mn_{0.3}La_{0.0015}Cu_{0.08}O_2$ | La | Cu | 1 | 0.4185 | 0.2 | 0.3 | 0.0015 | 0.005 | 0.08 | 4.5925 | 0 | 0 |
| Example 4 | $NaNi_{0.0225}Fe_{0.11}Mn_{0.75}La_{0.0375}Co_{0.08}O_2$ | La | Cu | 1 | 0.0225 | 0.11 | 0.75 | 0.0375 | 0.05 | 0.08 | 8 | 0 | 0 |
| Example 5 | $NaNi_{0.05625}Fe_{0.11}Mn_{0.75}La_{0.00375}Cu_{0.08}O_2$ | La | Cu | 1 | 0.05625 | 0.11 | 0.75 | 0.00375 | 0.005 | 0.08 | 8.33 | 0 | 0 |
| Example 6 | $NaNi_{0.3}Fe_{0.1}Mn_{0.5}La_{0.02}Cu_{0.08}O_2$ | La | Cu | 1 | 0.3 | 0.1 | 0.5 | 0.02 | 0.04 | 0.08 | 9 | 0 | 0 |
| Example 7 | $NaNi_{0.087}Fe_{0.313}Mn_{0.5}La_{0.02}Cu_{0.08}O_2$ | La | Cu | 1 | 0.087 | 0.313 | 0.5 | 0.02 | 0.04 | 0.08 | 2.88 | 0 | 0 |
| Example 8 | $Na_{0.6}Ni_{0.2}Fe_{0.2}Mn_{0.5}La_{0.02}Cu_{0.08}O_2$ | La | Cu | 0.6 | 0.2 | 0.2 | 0.5 | 0.02 | 0.04 | 0.08 | 4.5 | 0 | 0 |
| Example 9 | $NaNi_{0.07}Fe_{0.11}Mn_{0.5}La_{0.02}Cu_{0.3}O_2$ | La | Cu | 1 | 0.07 | 0.11 | 0.5 | 0.02 | 0.04 | 0.3 | 6.18 | 0 | 0 |
| Example 10 | $NaNi_{0.28}Fe_{0.2}Mn_{0.5}La_{0.02}O_2$ | La | 0 | 1 | 0.28 | 0.2 | 0.5 | 0.02 | 0.04 | 0 | 4.9 | 0 | 0 |
| Example 11 | $NaNi_{0.35}Fe_{0.05}Mn_{0.5}La_{0.02}Cu_{0.08}O_2$ | La | Cu | 1 | 0.35 | 0.05 | 0.5 | 0.02 | 0.04 | 0.08 | 18 | 0 | 0 |
| Example 12 | $NaNi_{0.07}Fe_{0.33}Mn_{0.5}La_{0.02}Cu_{0.08}O_2$ | La | Cu | 1 | 0.07 | 0.33 | 0.5 | 0.02 | 0.04 | 0.08 | 2.73 | 0 | 0 |
| Example 13 | $NaNi_{0.2}Fe_{0.2}Mn_{0.5}Pr_{0.02}Cu_{0.08}O_2$ | Pr | Cu | 1 | 0.2 | 0.2 | 0.5 | 0.02 | 0.04 | 0.08 | 4.5 | 0 | 0 |
| Example 14 | $NaNi_{0.2}Fe_{0.2}Mn_{0.5}Nd0_{.02}Cu_{0.08}O_2$ | Nd | Cu | 1 | 0.2 | 0.2 | 0.5 | 0.02 | 0.04 | 0.08 | 4.5 | 0 | 0 |
| Example 15 | $NaNi_{0.2}Fe_{0.2}Mn_{0.5}La_{0.02}Mg_{0.08}O_2$ | La | Mg | 1 | 0.2 | 0.2 | 0.5 | 0.02 | 0.04 | 0.08 | 4.5 | 0 | 0 |
| Example 16 | $NaNi_{0.2}Fe_{0.2}Mn_{0.5}La_{0.02}Si_{0.08}O_2$ | La | Si | 1 | 0.2 | 0.2 | 0.5 | 0.02 | 0.04 | 0.08 | 4.5 | 0 | 0 |
| Example 17 | $NaNi_{0.2}Fe_{0.2}Mn_{0.5}La_{0.02}Ti_{0.08}O_2$ | La | Ti | 1 | 0.2 | 0.2 | 0.5 | 0.02 | 0.04 | 0.08 | 4.5 | 0 | 0 |
| Example 18 | $NaNi_{0.1}Fe_{0.2}Mn_{0.6}La_{0.02}Cu_{0.08}O_2$ | La | Cu | 1 | 0.1 | 0.2 | 0.6 | 0.02 | 0.03 | 0.08 | 4.5 | 0 | 0 |
| Example 19 | $NaNi_{0.15}Fe_{0.2}Mn_{0.55}La_{0.02}Cu_{0.08}O_2$ | La | Cu | 1 | 0.15 | 0.2 | 0.55 | 0.02 | 0.04 | 0.08 | 4.5 | 0 | 0 |
| Example 20 | $NaNi_{0.25}Fe_{0.15}Mn_{0.5}La_{0.02}Cu_{0.08}O_2$ | La | Cu | 1 | 0.25 | 0.15 | 0.5 | 0.02 | 0.04 | 0.08 | 6 | 0 | 0 |
| Example 21 | $NaNi_{0.11}Fe_{0.29}Mn_{0.5}La_{0.02}Cu_{0.08}O_2$ | La | Cu | 1 | 0.11 | 0.29 | 0.5 | 0.02 | 0.04 | 0.08 | 3.1 | 0 | 0 |
| Example 22 | $NaNi_{0.23}Fe_{0.17}Mn_{0.5}La_{0.02}Cu_{0.08}O_2$ | La | Cu | 1 | 0.23 | 0.17 | 0.5 | 0.02 | 0.04 | 0.08 | 5.29 | 0 | 0 |
| Example 23 | $NaNi_{0.2}Fe_{0.2}Mn_{0.5}La_{0.02}Cu_{0.08}O_{1.9}F_{0.1}$ | La | Cu | 1 | 0.2 | 0.2 | 0.5 | 0.02 | 0.04 | 0.08 | 4.5 | 0 | 0.1 |
| Example 24 | $NaNi_{0.2}Fe_{0.2}Mn_{0.3}La_{0.02}Cu_{0.08}O_{1.95}F_{0.05}$ | La | Cu | 1 | 0.2 | 0.2 | 0.5 | 0.02 | 0.04 | 0.08 | 4.5 | 0 | 0.05 |
| Comparative Example 1 | $NaNi_{0.3184}Fe_{0.2}Mn_{0.4}La_{0.0016}Cu_{0.08}O_2$ | La | Cu | 1 | 0.3184 | 0.2 | 0.4 | 0.0016 | 0.004 | 0.08 | 4.592 | 0 | 0 |

| | Chemical formula | M1 composition | M2 composition | Value of x | Value of a | Value of b | Value of c | Value of d | Value of d/c | Value of e | (a+b+c)/b | Value of $\delta$ | Value of f |
|---|---|---|---|---|---|---|---|---|---|---|---|---|---|
| Comparative Example 2 | $NaNi_{0.119}Fe_{0.2}Mn_{0.5}La_{0.03}Cu_{0.08}O_2$ | La | Cu | 1 | 0.19 | 0.2 | 0.5 | 0.03 | 0.06 | 0.08 | 4.45 | 0 | 0 |
| Comparative Example 3 | $NaNi_{0.46}Fe_{0.2}Mn_{0.25}La_{0.01}Cu_{0.08}O_2$ | La | Cu | 1 | 0.46 | 0.2 | 0.25 | 0.01 | 0.04 | 0.08 | 4.55 | 0 | 0 |
| Comparative Example 4 | $NaNi_{0.048}Fe_{0.11}Mn_{0.8}La_{0.032}Cu_{0.01}O_2$ | La | Cu | 1 | 0.048 | 0.11 | 0.8 | 0.032 | 0.04 | 0.01 | 8.71 | 0 | 0 |

The $D_v50$, the specific surface area, the tap density, the compacted density under a pressure of 300 MPa, the pH value of the soaking solution, the phase, the space group, and the interlayer spacing of the positive electrode active materials, as well as the capacity and capacity retention rate of the resulting sodium-ion batteries in Examples 1 to 24 and Comparative Examples 1 to 4, were characterized, with the results shown in Table 2.

Performance Testing:

1. Testing of phase, space group, and interlayer spacing of positive electrode active material: XRD patterns were obtained for the positive electrode active material. The phase and the space group of the positive electrode active material were determined based on the positions of characteristic peaks in an XRD pattern. The interlayer spacing d of the positive electrode active material was calculated based on the position of the (003) peak or (002) peak in X-ray diffraction, the corresponding peak, and the formula $d = \lambda/(2\sin\theta)$, where in the formula $d = \lambda/(2\sin\theta)$, the radiation wavelength $\lambda = 1.5406$ Å. A characteristic peak in the 2θ angle range of 40.5° to 42.5° indicated that the positive electrode active material was in the O3 phase, with a space group including $R\bar{3}m$. A characteristic peak in the 2θ angle range of 48° to 50° indicated that the positive electrode active material was in the P2 phase, with a space group including P63/mmc.

2. Measurement of $D_v50$ of positive electrode active material: Measurement was performed using a Malvern Master Size 3000 laser particle size analyzer in accordance with standard GB/T 19077-2016.

3. Measurement of tap density: The weighed positive electrode active material was loaded into a measuring cylinder of a tapping device, and the measuring cylinder was fixed on a support. The cam was rotated, causing a guide rod to drive the support to slide up and down, impacting an anvil. Vibration was performed 250 $\pm$ 15 times per minute for 12 minutes. The volume of the positive electrode active material in the measuring cylinder was measured, and the ratio of the mass to the volume of the positive electrode active material was the tap density of the positive electrode active material.

The formula for calculating tap density was: pbt = $m_0$/V,

where pbt referred to tap density, in $g/cm^3$;
$m_0$ referred to mass of the positive electrode active material, in g; and
V referred to volume of the positive electrode active material after tapping (volume of a measuring cup), in $cm^3$.

4. Compacted density of positive electrode active material under pressure of 300 MPa: A rolled electrode plate was taken, and a circular or square region with an area of s was cut using a cutting die, with the thickness measured as a and weighed as $m_1$. The positive electrode material was washed off with a mixture of acetone and alcohol and dried, and the remaining aluminum foil was weighed as $m_2$, with the thickness of the aluminum foil measured as b. The difference in weight of the region and the aluminum foil was divided by the area s of the circular or square shape to calculate the surface density, that is, surface density = $(m_1 - m_2)/s$. The surface density was divided by the thickness difference to obtain the compacted density, that is, compacted density = $(m_1 - m_2)/[s(a - b)]$.

5. Measurement of pH value of soaking solution of positive electrode active material: The positive electrode active material was dispersed in pure water for soaking, filtered to obtain the soaking solution, and the soaking solution was titrated with a standard hydrochloric acid solution.

6. Capacity testing of positive electrode plate: The positive electrode plate was prepared, and the negative electrode plate was prepared, punched, and weighed. The masses of the positive and negative electrode plates were correspondingly fit according to the types of the positive and negative electrode materials. The positive electrode plate and the negative electrode plate were placed in a glove box for 2 h. A button battery was assembled in the glove box, and the prepared button battery was clamped on an electrochemical testing cabinet. The charge-discharge current was calculated based on a test rate (0.2C, 1C, 3C, or 5C), current = rate $\times$ theoretical specific capacity $\times$ (M2 - M1) $\times$ ω%, where theoretical specific capacity was determined based on the theoretical specific capacity of the positive electrode material;

M2 referred to actual weight of the electrode plate;
M1 referred to average weight of the current collector; and
ω% referred to actual mass fraction of the active material.

7. Battery capacity retention rate testing:
Taking Example 1 as an example, at 25°C, the secondary battery was charged to a charge cut-off voltage of 4.2 V at a constant current rate of 0.1C, then discharged to 1.5 V at 0.1C, left standing for 5 min, and then discharged to a discharge cut-off voltage of 2.8 V at a constant current rate of 0.5C, and left standing for 5 min; and a discharge capacity of the battery at this time was recorded as $C_0$. The battery was subjected to 500 charge-discharge cycles according to this method, and the discharge capacity of the battery after 500 cycles was recorded as $C_1$.

The cycling capacity retention rate of the secondary battery = $C_1/C_0 \times 100\%$.

The testing processes for the capacity retention rates of the secondary batteries in Examples 2 to 24 and Comparative Examples 1 to 4 were the same as above.

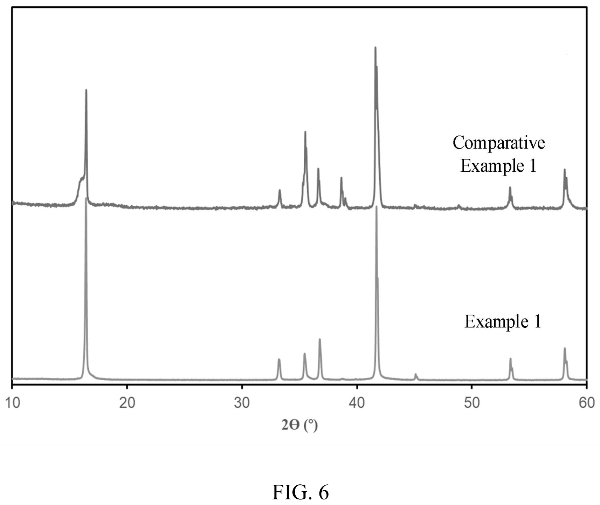

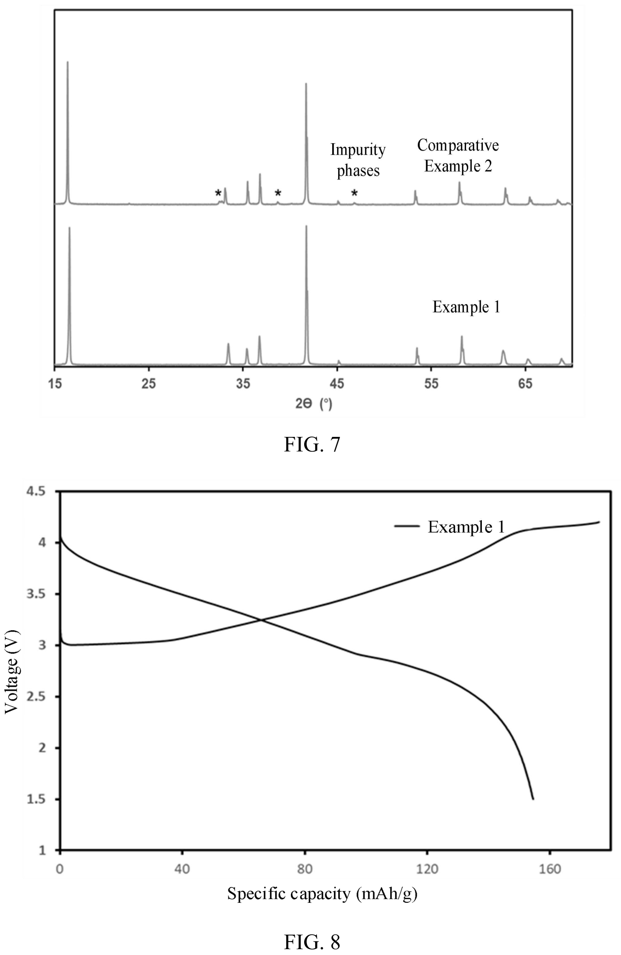

The XRD patterns of the positive electrode active materials of Example 1, Comparative Example 1, and Comparative Example 2 are shown in FIG. 6 and FIG. 7. Compared to Example 1, in Comparative Example 1, the ratio d/c of the rare earth element M1 to Mn in the positive electrode active material is 0.004, which is less than 0.005, and the peaks between 10 to 20 of the positive electrode active material are not significant, while the impurity peaks between 30 to 40 are more evident, indicating that too little rare earth element is not conducive to improving the air stability and cycling stability of the positive electrode active material. Compared to Example 1, in Comparative Example 2, the ratio d/c of the rare earth element M1 to Mn in the positive electrode active material is 0.06, which is greater than 0.05, and the positive electrode active material shows obvious impurity peaks, indicating that excessive rare earth element leads to insufficient solid solubility between the rare earth element and Mn, causing aggregation of the rare earth element on the surface of the positive electrode active material and the formation of impurity phases.

FIG. 8 is a charge-discharge curve of the sodium-ion battery prepared in Example 1 at 0.1C for the first cycle, indicating that the operating voltage range of the battery is 1.5 V to 4.2 V.

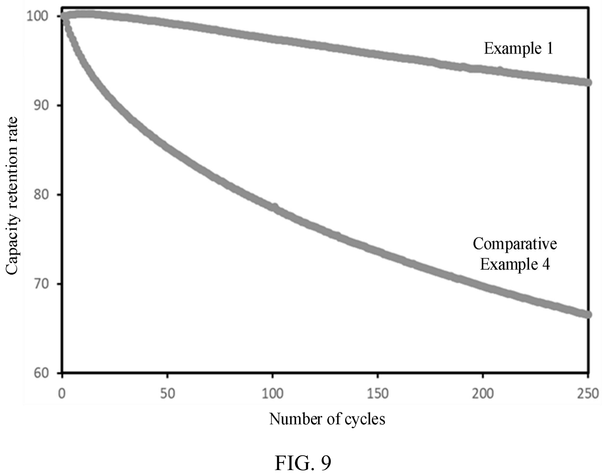

The comparison diagram of the capacity retention rates of Example 1 and Comparative Example 4 is shown in FIG. 9, indicating that the capacity retention rate of Example 1 of the present application is significantly better than that of Comparative Example 4.

**Table 2**

| | Space group | Interlayer spacing (nm) | $D_v50$ ($\mu$m) | Compacted density at 300 MPa (g/cm³) | Value of pH of soaking solution | Capacity at 0.1C (mAh/g) | Capacity retention rate after 200 cycles (%) |
|---|---|---|---|---|---|---|---|
| Example 1 | R$\bar{3}$m | 0.537 | 8.6 | 3.5 | 12.7 | 155 | 96 |
| Example 2 | R$\bar{3}$m | 0.541 | 7.2 | 3.5 | 12.6 | 134 | 92 |
| Example 3 | R$\bar{3}$m | 0.544 | 8.1 | 3.6 | 12.7 | 132 | 93 |
| Example 4 | R$\bar{3}$m | 0.542 | 8.2 | 3.6 | 12.7 | 129 | 91 |
| Example 5 | R$\bar{3}$m | 0.539 | 8.5 | 3.5 | 12.7 | 133 | 92 |
| Example 6 | R$\bar{3}$m | 0.533 | 8.3 | 3.4 | 12.6 | 124 | 91 |
| Example 7 | R$\bar{3}$m | 0.543 | 8.1 | 3.5 | 12.7 | 147 | 81 |
| Example 8 | P63/mmc | 0.551 | 7.1 | 3.5 | 12.6 | 125 | 94 |
| Example 9 | R$\bar{3}$m | 0.534 | 9 | 3.5 | 12.6 | 146 | 95 |
| Example 10 | R$\bar{3}$m | 0.54 | 8.1 | 3.4 | 12.8 | 143 | 90 |
| Example 11 | R$\bar{3}$m | 0.532 | 8.4 | 3.5 | 12.6 | 131 | 90 |
| Example 12 | R$\bar{3}$m | 0.548 | 8.1 | 3.5 | 12.6 | 151 | 81 |
| Example 13 | R$\bar{3}$m | 0.535 | 8.1 | 3.6 | 12.6 | 129 | 84 |
| Example 14 | R$\bar{3}$m | 0.538 | 8.3 | 3.6 | 12.5 | 137 | 90 |
| Example 15 | R$\bar{3}$m | 0.546 | 8.5 | 3.5 | 12.6 | 134 | 88 |
| Example 16 | R$\bar{3}$m | 0.538 | 8.8 | 3.4 | 12.7 | 140 | 85 |
| Example 17 | R$\bar{3}$m | 0.533 | 8.7 | 3.5 | 12.5 | 136 | 89 |
| Example 18 | R$\bar{3}$m | 0.537 | 8.4 | 3.5 | 12.6 | 143 | 93 |
| Example 19 | R$\bar{3}$m | 0.54 | 8.3 | 3.5 | 12.7 | 141 | 91 |
| Example 20 | R$\bar{3}$m | 0.543 | 8.4 | 3.4 | 12.5 | 148 | 87 |
| Example 21 | R$\bar{3}$m | 0.539 | 8.6 | 3.5 | 12.6 | 144 | 86 |

(continued)

| | Space group | Interlayer spacing (nm) | $D_v50$ ($\mu$m) | Compacted density at 300 MPa (g/cm$^3$) | Value of pH of soaking solution | Capacity at 0.1C (mAh/g) | Capacity retention rate after 200 cycles (%) |
|---|---|---|---|---|---|---|---|
| Example 22 | R$\bar{3}$m | 0.542 | 8.7 | 3.4 | 12.6 | 139 | 93 |
| Example 23 | R$\bar{3}$m | 0.547 | 8.3 | 3.5 | 12.5 | 140 | 94 |
| Example 24 | R$\bar{3}$m | 0.539 | 8.9 | 3.5 | 12.6 | 137 | 96 |
| Comparative Example 1 | R$\bar{3}$m | 0.548 | 9.3 | 3.3 | 12.8 | 116 | 74 |
| Comparative Example 2 | R$\bar{3}$m | 0.544 | 8.7 | 3.2 | 12.6 | 111 | 72 |
| Comparative Example 3 | R$\bar{3}$m | 0.539 | 8.6 | 3.1 | 12.6 | 112 | 79 |
| Comparative Example 4 | R$\bar{3}$m | 0.541 | 8.5 | 3.3 | 12.7 | 113 | 70 |

It can be seen from Table 2, in the embodiments of the present application, using NiFeMn as the main material, doping with a rare earth element M1 and a doping element M2, and controlling the ratio of the rare earth element M1 to Mn can improve the air stability and cycling stability of the positive electrode active material, thereby enhancing the capacity retention rate of a battery containing the material. Compared to the Examples, in Comparative Examples 1 and 2, the d/c values do not fall within the range of the embodiments of the present application, and in Comparative Examples 3 and 4, the Mn content c values do not fall within the range of the embodiments of the present application, resulting in significantly lower capacity retention rates and capacities of the batteries containing the material.

In conclusion, it should be noted that the foregoing embodiments are merely for describing the technical solutions of the present application rather than for limiting the present application. Although the present application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of the present application. All such modifications and equivalent replacements shall fall within the scope of claims and specification of the present application. In particular, as long as there is no structural conflict, the various technical features mentioned in the embodiments can be combined in any manner. The present application is not limited to the specific embodiments disclosed in this specification, but includes all technical solutions falling within the scope of the claims.

**Claims**

1. A positive electrode active material, wherein the positive electrode active material comprises:

$$Na_xNi_aFe_bMn_cM1_dM2_eO_{2+\delta-f}F_f,$$

wherein M1 comprises a rare earth element; M2 comprises at least one of a group IA element, a group IIA element, a group IIIA element, a group IVA element, a group VA element, a group VIA element, and a transition element; and $0.6 \leq x \leq 1.2$, $0 < a \leq 0.5$, $0 < b \leq 0.4$, $0.3 \leq c \leq 0.75$, $0.001 \leq d \leq 0.05$, $0 \leq e \leq 0.3$, $-0.1 \leq \delta \leq 0.1$, $0 \leq f \leq 0.1$, $0.005 \leq d/c \leq 0.05$, and $a + b + c + d + e = 1$.

2. The positive electrode active material according to claim 1, wherein the rare earth element comprises at least one of La, Ce, Pr, Nd, Sm, Eu, Gd, Tb, Dy, Ho, Er, Tm, Yb, and Lu.

3. The positive electrode active material according to claim 1 or 2, wherein M2 comprises at least one of B, Mg, Al, Si, K, Ca, Ga, Ge, Se, Rb, Sr, In, Sn, Sb, Te, Sc, Ti, V, Cr, Co, Cu, Zn, Y, Zr, Nb, Mo, Ru, Rh, Pd, Ag, Cd, Hf, Ta, W, Re, Os, Ir, Pt, and Au.

4. The positive electrode active material according to any one of claims 1 to 3, wherein $0.01 \leq d/c \leq 0.03$.

5. The positive electrode active material according to any one of claims 1 to 4, wherein the positive electrode active material satisfies at least one of the following conditions:

$$0.1 \le a \le 0.4,$$

optionally, $0.15 \le a \le 0.3$;

$$0.1 \le b \le 0.35,$$

optionally, $0.15 \le b \le 0.35$; and

$$0.35 \le c \le 0.6,$$

optionally, $0.35 \le c \le 0.5$.

6. The positive electrode active material according to any one of claims 1 to 5, wherein $1.75 \le (a + b + c)/b \le 9.5$, optionally, $2 \le (a + b + c)/b \le 9.5$, more optionally, $2 \le (a + b + c)/b \le 6.3$.

7. The positive electrode active material according to any one of claims 1 to 6, wherein $0.8 < x \le 1.0$, a phase of the positive electrode active material comprises an O3 phase, a space group comprises R$\bar{3}$m, and an interlayer spacing ranges from 0.53 nm to 0.55 nm.

8. The positive electrode active material according to any one of claims 1 to 6, wherein $0.6 \le x \le 0.8$, a phase of the positive electrode active material comprises a P2 phase, a space group comprises P63/mmc, and an interlayer spacing ranges from 0.54 nm to 0.57 nm.

9. The positive electrode active material according to any one of claims 1 to 8, wherein a pH value of a soaking solution of the positive electrode active material is less than or equal to 13, optionally, the pH value of the soaking solution of the positive electrode active material is less than or equal to 12.7, more optionally, the pH value of the soaking solution of the positive electrode active material is $11.0 \le pH \le 12.7$.

10. The positive electrode active material according to any one of claims 1 to 9, wherein the positive electrode active material satisfies at least one of the following conditions:

$D_v50$ of the positive electrode active material ranges from 3 $\mu$m to 30 $\mu$m, optionally from 5 $\mu$m to 15 $\mu$m;
a specific surface area of the positive electrode active material ranges from 0.1 m$^2$/g to 5 m$^2$/g, optionally from 0.3 m$^2$/g to 3 m$^2$/g;
a tap density of the positive electrode active material ranges from 1 g/cm$^3$ to 3 g/cm$^3$, optionally from 1.5 g/cm$^3$ to 2.5 g/cm$^3$; and
a compacted density of the positive electrode active material under a pressure of 300 MPa ranges from 3.0 g/cm$^3$ to 4.0 g/cm$^3$.

11. A method for preparing the positive electrode active material according to any one of claims 1 to 10, comprising:

mixing an Na source, an Ni source, an Fe source, an Mn source, an M1 source, and an M2 source to obtain a precursor; and
calcining the precursor to obtain the positive electrode active material.

12. A method for preparing the positive electrode active material according to any one of claims 1 to 10, comprising:

mixing an Ni source, an Fe source, an Mn source, an M1 source, and an M2 source with water to obtain a mixed solution;
reacting the solution with a precipitant to obtain a precursor; and
mixing the precursor with an Na source and calcining to obtain the positive electrode active material.

13. A positive electrode plate, wherein the positive electrode plate comprises the positive electrode active material according to any one of claims 1 to 10 or the positive electrode active material prepared by the method according to claim 11 or 12.

14. A battery, wherein the battery comprises the positive electrode plate according to claim 13.

15. An electric device, comprising the battery according to claim 14.

FIG. 1

FIG. 2

FIG. 3

FIG. 4

FIG. 5

FIG. 6

Impurity phases

Comparative Example 2

Example 1

FIG. 7

FIG. 8

FIG. 9

## INTERNATIONAL SEARCH REPORT

International application No.

**PCT/CN2023/119789**

### A. CLASSIFICATION OF SUBJECT MATTER

H01M4/1315(2010.01)i; H01M4/131(2010.01)i; H01M4/505(2010.01)i; H01M4/36(2006.01)i; H01M4/525(2010.01)i; H01M4/485(2010.01)i

According to International Patent Classification (IPC) or to both national classification and IPC

### B. FIELDS SEARCHED

Minimum documentation searched (classification system followed by classification symbols)

IPC: H01M4/-

Documentation searched other than minimum documentation to the extent that such documents are included in the fields searched

Electronic data base consulted during the international search (name of data base and, where practicable, search terms used)

CNTXT, VEN, ENTXTC, ENTXT, CNKI, ISI: 钠离子电池, 钠二次电池, 钠电, 层状氧化物, 层状过渡金属氧化物, Na+, +Ni+, +Fe+, +Mn+, +O+, +F+, 稀土, La, Ce, Pr, Nd, Sm, Eu, Gd, Tb, Dy, Ho, Er, Tm, Yb, Lu, 掺杂, 阻挡, 防护, 阻止, 保护, 水, 氧, 气, 汽, Sodium-ion, Sodium, battery, cell, Rare earth, dop+, Layered oxide, Layered Transition Metal Oxides

### C. DOCUMENTS CONSIDERED TO BE RELEVANT

| Category* | Citation of document, with indication, where appropriate, of the relevant passages | Relevant to claim No. |
|---|---|---|
| A | CN 115810748 A (SHENZHEN TOPBAND BATTERY CO., LTD.) 17 March 2023 (2023-03-17)<br>entire document | 1-15 |
| A | CN 113889619 A (SVOLT ENERGY TECHNOLOGY CO., LTD.) 04 January 2022 (2022-01-04)<br>entire document | 1-15 |
| A | CN 115224269 A (SHANGHAI LINGFANG NEW ENERGY TECHNOLOGY CO., LTD.) 21 October 2022 (2022-10-21)<br>entire document | 1-15 |
| A | US 2012279850 A1 (PATOUX SEBASTIEN et al.) 08 November 2012 (2012-11-08)<br>entire document | 1-15 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **30 November 2023** | **08 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**EP 4 730 420 A1**

## INTERNATIONAL SEARCH REPORT
### Information on patent family members

International application No.

**PCT/CN2023/119789**

| Patent document cited in search report | | | Publication date (day/month/year) | Patent family member(s) | | | Publication date (day/month/year) |
|---|---|---|---|---|---|---|---|
| CN | 115810748 | A | 17 March 2023 | None | | | |
| CN | 113889619 | A | 04 January 2022 | None | | | |
| CN | 115224269 | A | 21 October 2022 | None | | | |
| US | 2012279850 | A1 | 08 November 2012 | WO | 2011058239 | A1 | 19 May 2011 |
| | | | | US | 8652431 | B2 | 18 February 2014 |
| | | | | EP | 2499092 | A1 | 19 September 2012 |
| | | | | EP | 2499092 | B1 | 17 April 2019 |
| | | | | FR | 2952367 | A1 | 13 May 2011 |
| | | | | FR | 2952367 | B1 | 28 September 2012 |

Form PCT/ISA/210 (patent family annex) (July 2022)